# EUROPEAN PATENT SPECIFICATION

(11) **EP 3 279 796 B1**
(45) Date of publication and mention of the grant of the patent: **15.07.2020**
(21) Application number: 16182343.0
(22) Date of filing: 02.08.2016
(51) Int. Cl.: G06F 11/14, G06F 11/20

(54) **RESOURCE ACCESS MANAGEMENT COMPONENT AND METHOD THEREFOR**
RESSOURCENZUGANGSVERWALTUNGSKOMPONENTE UND VERFAHREN DAFÜR
COMPOSANT DE GESTION D'ACCÈS À UNE RESSOURCE ET PROCÉDÉ ASSOCIÉ

(43) Date of publication of application: 07.02.2018
(73) Proprietor: NXP USA, Inc., Austin TX 78735 (US)
(72) Inventor: SCOBIE, James Andrew Collier, Redhill, Surrey RH1 1SH (GB); MCMENAMIN, David, Redhill, Surrey RH1 1SH (GB)
(74) Representative: Lee, Candice Jane

(56) References cited:
- WO-A1-94/03901
- US-A1- 2003 037 275
- US-B1- 6 973 608

## Description

### Field of the invention

This invention relates to resource access management component, and in particular to a resource access management component arranged to manage access to resources within a processing system and method therefor.

### Background of the invention

In safety sensitive industries such as the automotive industry, there is a trend away from 'Fail Safe' systems, in which a system is put into a safe (restricted) mode when a fault is detected, towards 'Fault Tolerant' systems that enable less restricted operation upon a fault occurring.

In a conventional system consisting of multiple bus-master devices, when a fault is detected within one of the bus-master devices, the in-fault bus-master is typically taken offline, for example powered down or held in a safe/reset state in order to prevent fault propagation within the system. However, functionality dependent on resources and priorities allocated to the in-fault bus-master becomes unavailable when the in-fault bus-master is taken offline. This outcome conflicts with the desired move towards fault tolerant systems that support higher levels of functional availability during fault conditions.

US2003/0037275 A1 (Bakke et al.) provides access to shared resources within a computer networked environment. An adaptor connects a computer system to a shared resource. The computer system may comprise a set of host systems, and each host system may be a server. The servers are connected by a fibre optic network to the shared resource, which may be a set of storage elements. Each storage element may be a tape storage system, and together the co-located storage elements may be implemented as a common automated tape library. The adapter itself is implemented as part of a 'Storage Area Network' (SAN). The SAN may comprise multiple standard adaptors, any one of which may fail. With the system of US'275, access to the co-located storage elements from any server on the network is improved by making a spare/redundant adaptor available on standby. If one of the standard adaptors fails, preventing access by the servers to the co-located storage elements via that standard adaptor, then the spare adaptor is configured to take over. This enables continued access to the shared resource by the servers, via that spare adapter. The spare adaptor of US '275 represents a reduction in hardware in comparison to known systems, which may have multiple spare adaptors. With those known systems, a specific spare adapter may be provided for each adapter in the SAN. So a known system with four adapters in the SAN would have required four spare adapters to be available.

WO94/03901 A1 (Monolithic System technology Inc.) provides a high speed fault tolerant parallel bus for connecting master and slave devices within a semiconductor device to form a subsystem. Switches on parallel bus lines are programmable to isolate bus lines and thus also isolate a master that has failed, thus making the bus itself fault tolerant. US6973608 B1 (Abramovici Miron et al.) describes the detection and reprogramming of a faulty interconnect within an FPGA.

### Summary of the invention

The present invention provides a resource access management component and a method of managing resource access within a microcontroller unit or microprocessor as defined in detail in the appended independent claims 1 and 13.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figure 1 illustrates a simplified block diagram of an example of a processing system.
Figure 2 illustrates a simplified block diagram of an example of a resource access management component.
Figure 3 illustrates a simplified flowchart of an example of a method of managing resource access within a processing system.
Figures 4 and 5 schematically illustrate an example implementation of managing resource access within a processing system.
Figure 6 and 7 schematically illustrate an alternative example implementation of managing resource access within a processing system

### Detailed description of the preferred embodiments

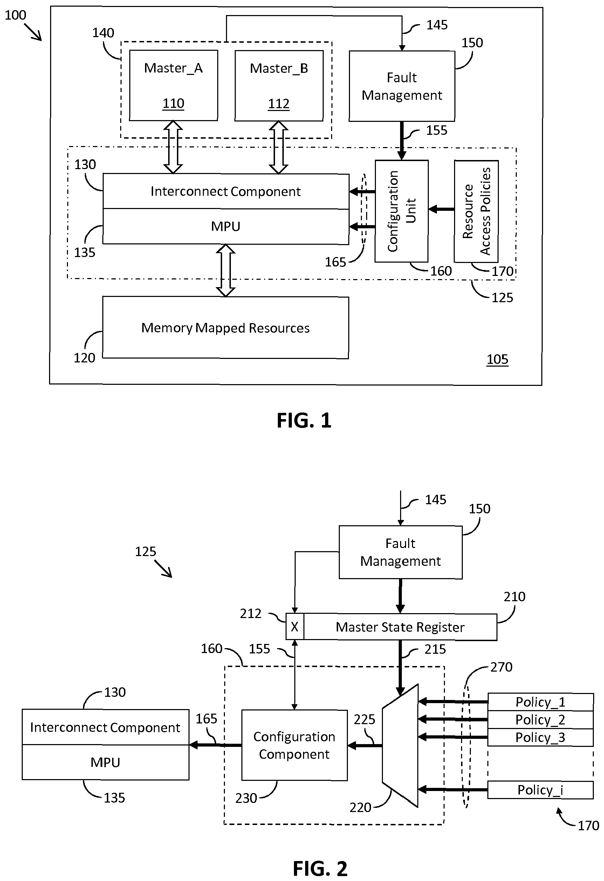

Referring now to Figure 1, there is illustrated a simplified block diagram of an example of a processing system 100, such as a microcontroller unit, microprocessor, etc. In the example illustrated in Figure 1, the processing system 100 is formed within an integrated circuit device 105. The processing system 100 comprises a plurality of interconnect-master devices 110, 112 and memory mapped resources 120. The memory mapped resources may comprise, for example, one or more flash memory modules, one or more random access memory (RAM) modules, one or more peripheral components, one or more ports to off-chip resources (e.g. memory elements, peripheral devices, or the like located externally to the integrated circuit device 105), etc.

In the processing system 100 illustrated in Figure 1, a fault detection component, illustrated generally at 140, is arranged to detect faults within the operation of the interconnect-master components 110, 112. For example, when two processing cores, such as the processing cores 110, 112 illustrated in Figure 1, are arranged to operate in lock-step, the fault detection component 140 may be arranged to detect differences between the outputs of the two processing cores. Upon detection of a fault, the fault detection component 140 signals 145 the detection of the fault to a fault management component 150. Upon receipt of such a fault signal 145, the fault management component 150 may then implement appropriate fault management actions. For example, upon detection of a hard fault within one of the processing cores 110, 112, the fault management component 150 may be arranged to power down or hold in a safe/reset state the in-fault processing core.

The processing system 100 illustrated in Figure 1 further comprises a resource management component 125 arranged to manage access to the resources within the processing system 100, such as the memory mapped resources 120. The resource access management component 125 comprises one or more resource access management devices configurable to manage access to the resources 120 within the processing system 100 by the interconnect-master devices 110, 112. Such resource access management devices may comprise, for example, one or more interconnect components, one or more memory protection units, one or more memory management units, etc.

In the example illustrated in Figure 1, the interconnect-master devices 110, 112 and memory mapped resources 120 are coupled to an interconnect component 130 arranged to enable the interconnect-master devices 110, 112 to access the memory mapped resources 120. The interconnect component 130 may comprise, for example, one or more bus components, crossbar switches, etc. Furthermore for the illustrated example, the memory mapped resources 120 are coupled to the interconnect component 130 via a memory protection unit (MPU) 135 configurable to control access to the memory mapped resources 120. Thus, in the illustrated example the resource access management component 125 comprises resource access management devices in the form of the interconnect component 130 and the MPU 135.

The resource access management component 125 further comprises one or more resource access configuration units, such as the resource access configuration unit 160 illustrated in Figure 1, arranged to receive an indication 155 when a fault has been detected in relation to an interconnect-master device 110, 112 of the processing system 100, and to reconfigure the resource access management devices 130, 135 in response to receiving such an indication 155 that a fault has been detected in relation to an interconnect-master device 110, 112. For example, upon receipt of such an indication 155 that a fault has been detected within an interconnect-master device 110, 112 the resource access configuration unit 160 may be arranged to reconfigure the resource access management devices 130, 135 to inhibit access to resources by the in-fault interconnect-master device. In this manner, fault propagation may be protected against. Additionally/alternatively, the resource access configuration unit 160 may be arranged to reconfigure the resource access management devices 130, 135 to remap access to protected resources of the in-fault interconnect-master device to one or more alternative (fault free) interconnect-master devices. Such remapping may comprise direct 1:1 remapping whereby the alternative interconnect-master device(s) to which resources are remapped are provided with the same access rights as the original (in-fault) interconnect-master device. Alternatively, such remapping may comprise providing the alternative interconnect-master device(s) to which resources are remapped with limited access (e.g. read only access or read/execute access, but not write access) to the remapped resources. In this manner, functionality dependent on resources and priorities allocated to the in-fault interconnect-master device may remain available when the in-fault interconnect-master device is taken offline, enabling higher levels of functional availability during fault conditions.

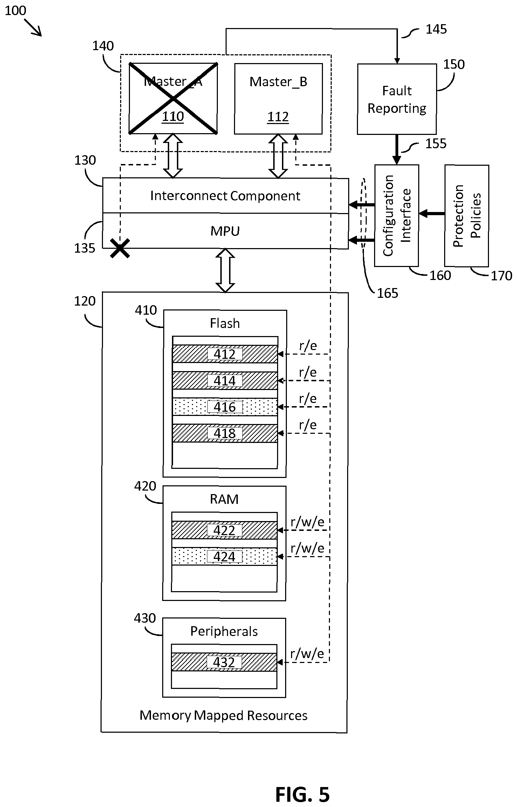

In the example illustrated in Figure 5, the indication 155 that a fault has been detected is provided by the fault management component 150. Alternatively, such an indication 155 may be provided by the fault detection component 140, or some other component.

Upon receiving an indication 155 that a fault has been detected in relation to an interconnect-master device 110, 112, the resource access configuration unit 160 may be arranged to identify the interconnect-master device 110, 112 in relation to which a fault has been detected, and reconfigure the resource access management devices 130, 135 based at least partly on the identified interconnect-master device 110, 112 in relation to which a fault has been detected. For example, the resource access configuration unit 160 may be arranged to reconfigure the resource access management devices 130, 135 to inhibit access to the memory mapped resources 120 by the in-fault interconnect-master device, and optionally to remap protected resources of the in-fault interconnect-master device to one or more alternative interconnect-master device(s).

In the example illustrated in Figure 1, the resource access management component 125 comprises a plurality of programmable resource access management policy registers 170 arranged to store resource access management policy definitions. Upon receipt of an indication 155 that a fault has been detected in relation to an interconnect-master device 110, 112, the resource access configuration unit 160 may thus be arranged to selectively read one or more resource access management policy definition(s) from one of the resource access management policy registers 170 depending on, for example, in relation to which of the interconnect-master device 110, 112 a fault has been detected. The resource access configuration unit 160 may then reconfigure the resource access management devices in accordance with the read resource access management policy definition(s).

As illustrated in Figure 1, the resource access configuration unit 160 may be arranged to provide reconfiguration information 165 to the resource access management devices 130, 135 in response to receiving an indication 155 that a fault has been detected in relation to an interconnect-master device 110, 112. The resource access management devices 130, 135 may then reconfigure access to resources 120 by the interconnect-master devices 110, 112 in accordance with the received reconfiguration information 165. Such reconfiguration information 165 may comprise, for example, resource access configuration format such as a device reconfiguration format record or the like.

Alternatively, the resource access configuration unit 160 may be arranged to directly re-configure access configuration parameters for the resource access management devices 130, 135 in response to receiving an indication 155 that a fault has been detected in relation to an interconnect-master device 110, 112. For example, the resource access management unit 160 may be capable of writing to one or more configuration registers (not shown) of the resource access management devices 130, 135.

Figure 2 illustrates a simplified block diagram of an example of the resource access management component 125 in more detail. In the example illustrated in Figure 2, the resource access configuration unit 160 is arranged to receive an indication 215 of an operational state of interconnect-master devices 110, 112 for the processing system 100, which in the illustrated example is provided by a master device state register 210. For example, the master device state register 210 may comprise a bit for each interconnect-master device 110, 112, and upon receipt of a fault signal 145 indicating that a fault has been detected within an interconnect-master component, the fault management component 150 may be arranged to set a bit within the master state register 210 corresponding to the interconnect-master device in relation to which a fault has been detected. In this manner, by reading the bit values 215 within the master state register 210, the resource access configuration unit 160 is able to obtain an operational state of interconnect-master devices 110, 112 for the processing system 100 based on the read bit values. The fault management component 150 may also be arranged to provide the indication 155 to the resource access configuration unit 160 that a fault has been detected in relation to an interconnect-master device 110, 112 by setting a fault detection bit 212 within the master device state register 210.

In the example illustrated in Figure 2, upon receipt of an indication 155 that a fault has been detected in relation to an interconnect-master device 110, 112 the resource access configuration unit 160 is arranged to reconfigure the resource access management devices 130, 135 based at least partly on the operational state of the interconnect-master devices as determined from the bit values 215 within the master state register 210. In this manner, the resource access configuration unit 160 is able to identify not only the interconnect-master device in relation to which the current fault has been detected, but also any other in-fault (or otherwise unavailable) interconnect-master devices, and to reconfigure the resource access management devices 130, 135 accordingly.

In particular for the illustrated example of Figure 2, the resource access configuration unit 160 comprises a multiplexer component 220 arranged to receive at data inputs thereof the resource access management policy definitions 270 stored within the resource access management policy registers 170. The multiplexer component 220 is further arranged to receive the bit values 215 stored within the master state register 210 defining the operational state of interconnect-master devices 110, 112 for the processing system 100 at control inputs thereof, and to selectively output 225 one of the received resource access management policy definitions 270 based on the received bit values 215. In this manner, a resource access management policy definition may be selected based on the status of each interconnect-master device as defined by the bit values 215 within the master state register 210.

The resource access configuration unit 160 illustrated in Figure 2 further comprises a configuration component 230 arranged to receive the selected resource access management policy definition 225 output by the multiplexer component 220, and upon receipt of an indication 155 that a fault has been detected in relation to an interconnect-master device 110, 112 (e.g. upon the fault detection bit 212 being set) to reconfigure the resource access management devices 130, 135 based at least partly on the selected resource access management policy definition 225.

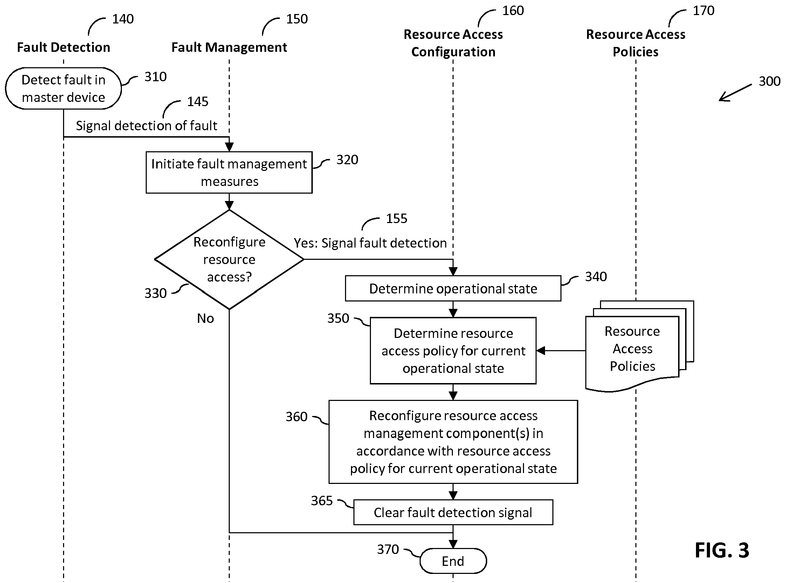

Referring now to Figure 3, there is illustrated a simplified flowchart of an example of a method of managing resource access within a processing system, such as may be implemented within the processing system 100 of Figure 1. The method starts at 310 with the detection of a fault within an interconnect-master device, for example by the fault detection component 140. In the illustrated example, the detection of the fault is then signalled 145 to the fault management component 150. Upon receipt of the fault signal 145, the fault management component 150 is arranged to implement appropriate fault management actions, for example by initiating fault management measures as illustrated at 320. Such fault management actions may include setting a bit within the master state register 210 (Figure 2) indicating in relation to which interconnect-master device 110, 112 a fault has been detected.

In the example method illustrated in Figure 3, it is determined whether resource access is to be reconfigured in response to the detected fault, at 330. Such a determination may be based on, for example, whether a resource access configuration bit has been set, the interconnect-master device in relation to which the fault was detected, the type of detected fault (e.g. hard or soft), etc. If it is determined that resource access is to be reconfigured, the detection of the fault in relation to an interconnect-master device is signalled 155 to, in the illustrated example, the resource access management component 125, for example by the fault detection bit 212 within the master state register 210 (Figure 2) being set.

In the example illustrated in Figure 3, upon receipt of the indication 155 that a fault has been detected in relation to an interconnect-master device, an operational state of interconnect-master devices for the processing system is then determined at 340, for example based on the bit values 215 within the master state register 210 (Figure 2). In this manner, interconnect-master devices in relation to which faults have been detected (or which are otherwise unavailable) may be identified. A resource access management policy for the determined operation state of interconnect-master devices is then determined at 350, for example based on resource access management policy definitions 270 stored within the resource access management policy registers 170. Resource access management devices, such as the interconnect component 130 and MPU 135, are then reconfigured in accordance with the resource access management policy for the determined operation state of interconnect-master devices, at 360. In the example illustrated in Figure 3, the fault detection signal 155 (e.g. the fault detection bit 212) is then cleared, at 365, and the method ends at 370.

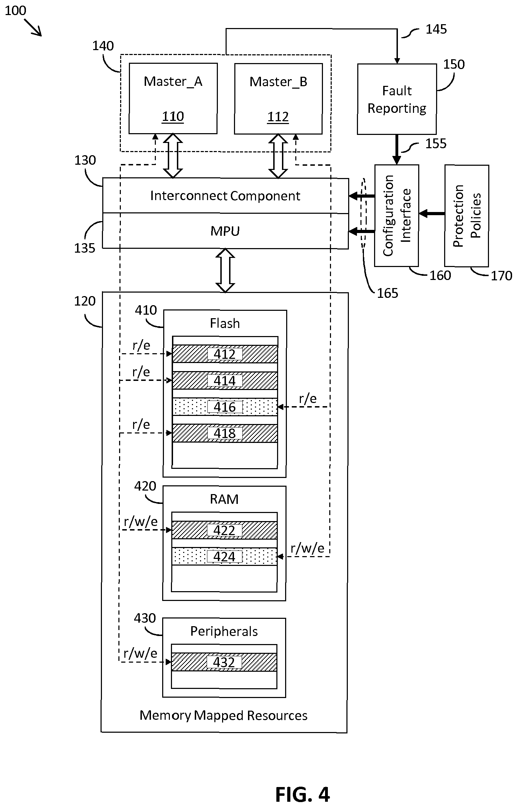

Referring now to Figures 4 and 5, there is schematically illustrated an example implementation of managing resource access within the processing system 100 of Figure 1. In the example illustrated in Figures 4 and 5, the processing system 100 comprises two processing cores 110, 112, and the memory mapped resources 120 comprise Flash memory 410, RAM 420 and peripheral devices 430.

Figure 4 illustrates resource access within the processing system 100 as configured prior to the detection of a fault. In this pre-fault configuration, the access management devices 130, 135 are configured such that the first processing core 110 has read/execute access to three areas 412, 414, 418 of Flash memory 410, read/write/execute access to one area 422 of RAM 420 and read/write/execute access to one peripheral device 432. In the pre-fault configuration of illustrated in Figure 4, the access management devices 130, 135 are further configured such that the second processing core 112 has read/execute access to one area 416 of Flash memory 410 and read/write/execute access to one area 424 of RAM 420. The access management devices 130, 135 may be configured such that the two processing cores 110, 112 have shared access (e.g. read/write/execute access) to all other memory mapped resources (e.g. other areas of memory and other peripheral devices).

Figure 5 illustrates resource access within the processing system 100 as configured following the detection of a fault within the first processing core 110. In this post-fault configuration, the access management devices 130, 135 are reconfigured such that the first processing core 110 is inhibited from accessing the memory mapped resources 120 to prevent fault propagation. The access management devices 130, 135 are further reconfigured such that:
- the read/execute access by the first processing core 110 to Flash areas 412, 414 and 418 is remapped to read/execute access by the second processing core 112;
- the read/write/execute access by the first processing core 110 to RAM area 422 is remapped to read/write/execute access by the second processing core 112; and
- the read/write/execute access by the first processing core 110 to the peripheral devices 432 is remapped to read/write/execute access by the second processing core 112.

In this manner, the second processing core 112 is able to take over responsibility for the processing of key tasks previously performed by the first processing core 110.

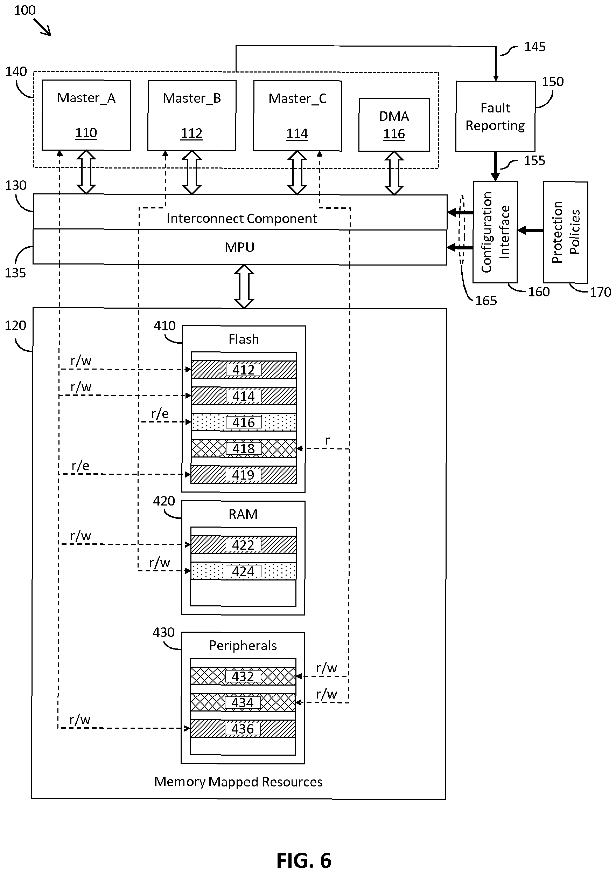

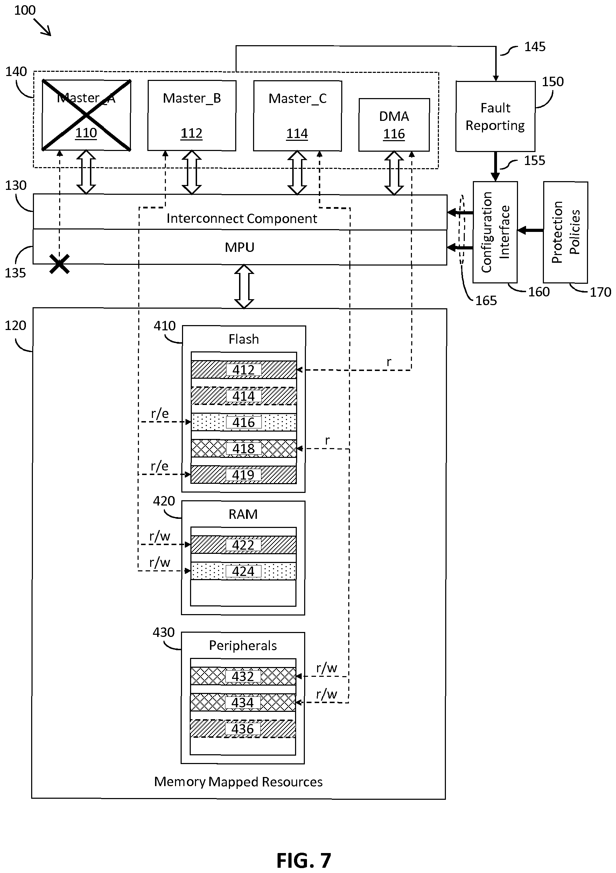

Referring now to Figures 6 and 7, there is schematically illustrated an alternative example implementation of managing resource access within the processing system 100 of Figure 1. In the example illustrated in Figures 6 and 7, the processing system 100 comprises three processing cores 110, 112, 114 and a direct memory access (DMA) unit 116. The memory mapped resources 120 again comprise Flash memory 410, RAM 420 and peripheral devices 430.

Figure 6 illustrates resource access within the processing system 100 as configured prior to the detection of a fault. In this pre-fault configuration, the access management devices 130, 135 are configured such that the first processing core 110 has read/write access to two areas 412, 414 of Flash memory 410, one area 422 of RAM 420 and one peripheral device 436, and read/execute access to a further area 419 of Flash memory 410. In this pre-fault configuration, the access management devices 130, 135 are further configured such that the second processing core 112 has read/execute access to one area 416 of Flash memory 410 and read/write access to one area 424 of RAM memory 420. In this pre-fault configuration, the access management devices 130, 135 are still further configured such that the third processing core 114 has read access to one area 418 of Flash memory 410 and read/write access to two peripheral devices 432, 434. The access management devices 130, 135 may be configured such that the three processing cores 110, 112, 114 and the DMA unit 116 have shared access to all other memory mapped resources (e.g. other areas of memory and other peripheral devices).

Figure 7 illustrates resource access within the processing system 100 as configured following the detection of a fault within the first processing core 110. In this post-fault configuration, the access management devices 130, 135 are reconfigured such that the first processing core 110 is inhibited from accessing the memory mapped resources 120 to prevent fault propagation. The access management devices 130, 135 are further reconfigured such that:
- the read/write access by the first processing core 110 to Flash area 412 is remapped to read access by the DMA unit 116;
- Flash area 414 is not accessible;
- the read/execute access by the first processing core 110 to Flash area 419 is remapped to read/execute access by the second processing core 112;
- the read/write access by the first processing core 110 to RAM area 422 is remapped to read/write access by the second processing core 112; and
- peripheral device 436 is not accessible.

Thus example embodiments of resource management component 125 have hereinbefore been described that provide a mechanism that is capable of dynamically responding to the detection of faults within interconnect-master devices by reconfiguring access management devices 130, 135, for example to inhibit access to resources by in-fault master devices and/or remapping access to resources and re-assigning priority accesses. In this manner, fault propagation can be prevented whilst supporting higher levels of functional availability during fault conditions. Advantageously, by implementing such resource access management within hardware components, such as in the illustrated examples, the reconfiguration of access to resources may be performed significantly faster than if reliant on application software intervention. Furthermore, such a hardware implementation is capable of implementing resource protection policies irrespective of which interconnect-master devices are in fault.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above.

Furthermore, because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Furthermore, the terms 'assert' or 'set' and 'negate' (or 'de-assert' or 'clear') are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, the examples, or portions thereof, may be implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A resource access management component (125) arranged to manage access to resources (120) within a microcontroller unit or a microprocessor (100) formed within an integrated circuit device (105);
the resource access management component (125) comprising:
at least one resource access management device (130, 135) configured to manage access to the resources by a plurality of interconnect-master devices (110, 112) of the microcontroller unit or microprocessor (100), the plurality of interconnect-master devices (110, 112) being processing cores;
the at least one resource access management device (130, 135) is configured to enable access to the resources by the plurality of interconnect-master devices (110, 112) via the at least one resource access management device (130, 135); and
at least one resource access configuration unit (160) arranged:
to receive an indication when a fault has been detected in relation to at least one interconnect-master device (110, 112) of the microcontroller unit or microprocessor (100), and
to reconfigure the at least one resource access management device (130, 135) in response to receiving the indication that a fault has been detected in relation to the at least one interconnect-master device (110, 112).

2. The resource access management component (125) of Claim 1, wherein upon receipt of the indication that a fault has been detected in relation to the at least one interconnect-master device (110, 112) the at least one resource access configuration unit (160) is arranged to:
identify the at least one interconnect-master device (110, 112) in relation to which a fault has been detected; and
reconfigure the at least one resource access management device (130, 135) based at least partly on the identified at least one interconnect-master device (110, 112) in relation to which a fault has been detected.

3. The resource access management component (125) of Claim 2, wherein upon receipt of the indication that a fault has been detected in relation to the at least one interconnect-master device (110, 112), the at least one resource access configuration unit (160) is arranged to:
determine an operational state of interconnect-master devices (110, 112) for the microcontroller unit or microprocessor (100); and
reconfigure the at least one resource access management device (130, 135) based at least partly on the determined operational state of interconnect-master devices (110, 112).

4. The resource access management component (125) of Claim 3, wherein upon receipt of the indication that a fault has been detected in relation to the at least one interconnect-master device (110, 112), the at least one resource access configuration unit (160) is arranged to:
determine the operational state of interconnect-master devices (110, 112);
select a resource access management policy from a plurality of resource access policies based on the determined operational state of the interconnect-master devices (110, 112); and
reconfigure the at least one resource access management device (130, 135) in accordance with the selected resource access management policy.

5. The resource access management component (125) of Claim 4, wherein the resource access management component (125) comprises a plurality of programmable resource access management policy registers (170) arranged to store resource access management policy definitions, and upon receipt of the indication that a fault has been detected in relation to the at least one interconnect-master device (110, 112) the at least one resource access configuration unit (160) is arranged:
to select at least one of the resource access management policy registers (170) depending on the determined operational state of interconnect-master devices (110, 112); and
to reconfigure the at least one resource access management device (130, 135) in accordance with a resource access management policy definition stored within the selected resource access management policy register.

6. The resource access management component (125) of any one of the preceding Claims, wherein the at least one resource access management device (130, 135) is configurable to manage access to at least one memory-mapped resource comprising at least one of:
at least one flash memory module (410);
at least one random access memory module (420);
at least one peripheral component (430); and
at least one port for access to off-chip resources.

7. The resource access management component (125) of any one of the preceding Claims, wherein upon receipt of the indication that a fault has been detected in relation to the at least one interconnect-master device (110, 112), the at least one resource access configuration unit (160) is arranged to reconfigure the at least one resource access management device (130, 135) to implement at least one of:
inhibition of access to at least one resource by the at least one interconnect-master device (110, 112) for which the detection of a fault has been indicated; and
remapping access to at least one protected resource of the at least one interconnect-master device (110, 112) for which the detection of a fault has been indicated to at least one alternative interconnect-master device (110, 112).

8. The resource access management component (125) of any one of the preceding Claims, wherein the at least one resource access management device (130, 135) comprises at least one of:
an interconnect component;
a memory protection unit; and
a memory management unit.

9. The resource access management component (125) of any one of the preceding Claims, wherein the at least one resource access configuration unit (160) is arranged to provide reconfiguration information to the at least one resource access management device (130, 135) in response to receiving the indication that a fault has been detected in relation to the at least one interconnect-master device (110, 112), and the at least one resource access management device (130, 135) is arranged to reconfigure access to resources by the interconnect-master devices (110, 112) permitted thereby in accordance with the received reconfiguration information.

10. The resource access management component (125) of Claim 9, wherein the reconfiguration information provided by the at least one resource access configuration unit (160) to the at least one resource access management device (130, 135) comprises a device configuration format record.

11. The resource access management component (125) of any one of Claims 1 to 8, wherein the at least one resource access configuration unit (160) is arranged to re-configure at least one access configuration parameter for the at least one resource access management device (130, 135) in response to receiving the indication that a fault has been detected in relation to the at least one interconnect-master device (110, 112).

12. A microcontroller unit or a microprocessor (100) formed within an integrated circuit device (105), the microcontroller unit or microprocessor (100) comprising:
a plurality of interconnect-master devices (110, 112); and
at least one processing resource (120);
wherein the microcontroller unit or microprocessor (100) further comprises a resource access management component (125) according to any one of the preceding Claims.

13. A method of managing resource access within a microcontroller unit or microprocessor (100), the microcontroller unit or microprocessor (100) formed within an integrated circuit device (105); the method comprising:
at least one resource access management device (130, 135) managing access to resources (120) by
a plurality of interconnect-master devices (110, 112) of the microcontroller unit or microprocessor (100), the plurality of interconnect-master devices (110, 112) being processing cores;
the at least one resource access management device (130, 135) enabling access to the resources by the plurality of interconnect-master devices (110, 112) via the at least one resource access management device (130, 135);
receiving an indication that a fault has been detected in relation to an interconnect-master device (110, 112) of the microcontroller unit or microprocessor (100); and
reconfiguring at least one resource access management device (130, 135) of the microcontroller unit or microprocessor (100) in response to receiving such an indication that a fault has been detected in relation to an interconnect-master device (110, 112) of the microcontroller unit or microprocessor (100).

14. The method of Claim 13, wherein the method comprises, upon receipt of an indication that a fault has been detected in relation to an interconnect-master device (110, 112) of the microcontroller unit or microprocessor (100):
identifying at least one interconnect-master device (110, 112) of the microcontroller unit or microprocessor (100) in relation to which a fault has been detected; and
reconfiguring the at least one resource access management device (130, 135) based at least partly on the identified at least one interconnect-master device (110, 112) in relation to which a fault has been detected.

15. The method of Claim 14, wherein the method comprises, upon receipt of an indication that a fault has been detected in relation to an interconnect-master device (110, 112) of the microcontroller unit or microprocessor (100):
determining an operational state of the interconnect-master devices (110, 112);
selecting a resource access management policy from a plurality of resource access policies based on the determined operational state of the interconnect-master devices (110, 112); and
reconfiguring the at least one resource access management device (130, 135) in accordance with the selected resource access management policy.

## Patentansprüche

1. Ressourcenzugangsverwaltungskomponente (125), die dafür angeordnet ist, den Zugang zu Ressourcen (120) in einer Mikrocontrollereinheit oder einem Mikroprozessor (100) zu verwalten, die/der in einer integrierten Schaltungsvorrichtung (105) gebildet ist,
wobei die Ressourcenzugangsverwaltungskomponente (125) Folgendes umfasst:
mindestens eine Ressourcenzugangsverwaltungsvorrichtung (130, 135), die dafür konfiguriert ist, den Zugang zu den Ressourcen durch mehrere Verbindungs-Master-Vorrichtungen (110, 112) der Mikrocontrollereinheit oder des Mikroprozessors (100) zu verwalten, wobei die mehreren Verbindungs-Master-Vorrichtungen (110, 112) Verarbeitungskerne sind,
wobei die mindestens eine Ressourcenzugangsverwaltungsvorrichtung (130, 135) dafür konfiguriert ist, den Zugang zu den Ressourcen durch die mehreren Verbindungs-Master-Vorrichtungen (110, 112) über die mindestens eine Ressourcenzugangsverwaltungsvorrichtung (130, 135) zu ermöglichen, und
mindestens eine Ressourcenzugangskonfigurationseinheit (160), die dafür angeordnet ist:
eine Angabe zu empfangen, wenn in Bezug auf mindestens eine Verbindungs-Master-Vorrichtung (110, 112) der Mikrocontrollereinheit oder des Mikroprozessors (100) ein Fehler erkannt wurde, und
die mindestens eine Ressourcenzugangsverwaltungsvorrichtung (130, 135) in Reaktion auf das Empfangen der Angabe, dass in Bezug auf die mindestens eine Verbindungs-Master-Vorrichtung (110, 112) ein Fehler erkannt wurde, neu zu konfigurieren.

2. Ressourcenzugangsverwaltungskomponente (125) nach Anspruch 1, wobei auf den Empfang der Angabe hin, dass in Bezug auf die mindestens eine Verbindungs-Master-Vorrichtung (110, 112) ein Fehler erkannt wurde, die mindestens eine Ressourcenzugangskonfigurationseinheit (160) für Folgendes angeordnet ist:
Identifizieren der mindestens einen Verbindungs-Master-Vorrichtung (110, 112), in Bezug auf die ein Fehler erkannt wurde, und
Neukonfigurieren der mindestens einen Ressourcenzugangsverwaltungsvorrichtung (130, 135), zumindest teilweise auf der identifizierten mindestens einen Verbindungs-Master-Vorrichtung (110, 112), in Bezug auf die ein Fehler erkannt wurde, basierend.

3. Ressourcenzugangsverwaltungskomponente (125) nach Anspruch 2, wobei auf den Empfang der Angabe hin, dass in Bezug auf die mindestens eine Verbindungs-Master-Vorrichtung (110, 112) ein Fehler erkannt wurde, die mindestens eine Ressourcenzugangskonfigurationseinheit (160) für Folgendes angeordnet ist:
Bestimmen eines Betriebszustandes der Verbindungs-Master-Vorrichtungen (110, 112) für die Mikrocontrollereinheit oder den Mikroprozessor (100) und
Neukonfigurieren der mindestens einen Ressourcenzugangsverwaltungsvorrichtung (130, 135), zumindest teilweise auf dem bestimmten Betriebszustand der Verbindungs-Master-Vorrichtungen (110, 112) basierend.

4. Ressourcenzugangsverwaltungskomponente (125) nach Anspruch 3, wobei auf den Empfang der Angabe hin, dass in Bezug auf die mindestens eine Verbindungs-Master-Vorrichtung (110, 112) ein Fehler erkannt wurde, die mindestens eine Ressourcenzugangskonfigurationseinheit (160) für Folgendes angeordnet ist:
Bestimmen des Betriebszustandes der Verbindungs-Master-Vorrichtungen (110, 112),
Auswählen einer Ressourcenzugangsverwaltungsstrategie von mehreren Ressourcenzugangsstrategien, basierend auf dem bestimmten Betriebszustand der Verbindungs-Master-Vorrichtungen (110, 112), und
Neukonfigurieren der mindestens einen Ressourcenzugangsverwaltungsvorrichtung (130, 135) gemäß der ausgewählten Ressourcenzugangsverwaltungsstrategie.

5. Ressourcenzugangsverwaltungskomponente (125) nach Anspruch 4, wobei die Ressourcenzugangsverwaltungskomponente (125) mehrere programmierbare Ressourcenzugangsverwaltungsstrategieregister (170) umfasst, die dafür angeordnet sind, Ressourcenzugangsverwaltungsstrategiedefinitionen zu speichern, und auf den Empfang der Angabe hin, dass in Bezug auf die mindestens eine Verbindungs-Master-Vorrichtung (110, 112) ein Fehler erkannt wurde, die mindestens eine Ressourcenzugangskonfigurationseinheit (160) dafür angeordnet ist:
abhängig von dem bestimmten Betriebszustand der Verbindungs-Master-Vorrichtungen (110, 112) mindestens eines der Ressourcenzugangsverwaltungsstrategieregister (170) auszuwählen und
die mindestens eine Ressourcenzugangsverwaltungsvorrichtung (130, 135) gemäß einer Ressourcenzugangsverwaltungsstrategiedefinition, die in dem ausgewählten Ressourcenzugangsverwaltungsstrategieregister gespeichert ist, neu zu konfigurieren.

6. Ressourcenzugangsverwaltungskomponente (125) nach einem der vorhergehenden Ansprüche, wobei die mindestens eine Ressourcenzugangsverwaltungsvorrichtung (130, 135) dafür konfigurierbar ist, den Zugang zu mindestens einer speicherabgebildeten Ressource zu verwalten, die mindestens eines des Folgenden umfasst:
mindestens ein Flash-Speichermodul (410),
mindestens ein Speichermodul mit wahlfreiem Zugriff (420),
mindestens eine Peripheriekomponente (430) und
mindestens einen Port für den Zugang zu Ressourcen außerhalb von Chips.

7. Ressourcenzugangsverwaltungskomponente (125) nach einem der vorhergehenden Ansprüche, wobei auf den Empfang der Angabe hin, dass in Bezug auf die mindestens eine Verbindungs-Master-Vorrichtung (110, 112) ein Fehler erkannt wurde, die mindestens eine Ressourcenzugangskonfigurationseinheit (160) dafür angeordnet ist, die mindestens eine Ressourcenzugangsverwaltungsvorrichtung (130, 135) dafür neu zu konfigurieren, mindestens eines des Folgenden umzusetzen:
Sperren des Zugangs zu mindestens einer Ressource durch die mindestens eine Verbindungs-Master-Vorrichtung (110, 112), für welche die Erkennung eines Fehlers angegeben wurde, und
Neuabbilden des Zugangs zu mindestens einer geschützten Ressource der mindestens einen Verbindungs-Master-Vorrichtung (110, 112), für welche die Erkennung eines Fehlers angegeben wurde, auf mindestens eine alternative Verbindungs-Master-Vorrichtung (110, 112).

8. Ressourcenzugangsverwaltungskomponente (125) nach einem der vorhergehenden Ansprüche, wobei die mindestens eine Ressourcenzugangsverwaltungsvorrichtung (130, 135) mindestens eines des Folgenden umfasst:
eine Verbindungskomponente,
eine Speicherschutzeinheit und
eine Speicherverwaltungseinheit.

9. Ressourcenzugangsverwaltungskomponente (125) nach einem der vorhergehenden Ansprüche, wobei die mindestens eine Ressourcenzugangskonfigurationseinheit (160) dafür angeordnet ist, in Reaktion auf das Empfangen der Angabe, dass in Bezug auf die mindestens eine Verbindungs-Master-Vorrichtung (110, 112) ein Fehler erkannt wurde, Neukonfigurationsinformationen für die mindestens eine Ressourcenzugangsverwaltungsvorrichtung (130, 135) bereitzustellen, und die mindestens eine Ressourcenzugangsverwaltungsvorrichtung (130, 135) dafür angeordnet ist, gemäß den empfangenen Neukonfigurationsinformationen den dadurch ermöglichten Zugang zu Ressourcen durch die Verbindungs-Master-Vorrichtungen (110, 112) neu zu konfigurieren.

10. Ressourcenzugangsverwaltungskomponente (125) nach Anspruch 9, wobei die Neukonfigurationsinformationen, die durch die mindestens eine Ressourcenzugangskonfigurationseinheit (160) für die mindestens eine Ressourcenzugangsverwaltungsvorrichtung (130, 135) bereitgestellt werden, eine Vorrichtungskonfigurationsformataufzeichnung umfassen.

11. Ressourcenzugangsverwaltungskomponente (125) nach einem der Ansprüche 1 bis 8, wobei die mindestens eine Ressourcenzugangskonfigurationseinheit (160) dafür angeordnet ist, in Reaktion auf das Empfangen der Angabe, dass in Bezug auf die mindestens eine Verbindungs-Master-Vorrichtung (110, 112) ein Fehler erkannt wurde, mindestens einen Zugangskonfigurationsparameter für die mindestens eine Ressourcenzugangsverwaltungsvorrichtung (130, 135) neu zu konfigurieren.

12. Mikrocontrollereinheit oder Mikroprozessor (100), gebildet in einer integrierten Schaltungsvorrichtung (105), wobei die Mikrocontrollereinheit oder der Mikroprozessor (100) Folgendes umfasst:
mehrere Verbindungs-Master-Vorrichtungen (110, 112) und
mindestens eine Verarbeitungsressource (120),
wobei die Mikrocontrollereinheit oder der Mikroprozessor (100) ferner eine Ressourcenzugangsverwaltungskomponente (125) nach einem der vorhergehenden Ansprüche umfasst.

13. Verfahren zum Verwalten von Ressourcenzugang in einer Mikrocontrollereinheit oder einem Mikroprozessor (100), wobei die Mikrocontrollereinheit oder der Mikroprozessor (100) in einer integrierten Schaltungsvorrichtung (105) gebildet sind, wobei das Verfahren Folgendes umfasst:
Verwalten von Zugang zu Ressourcen (120) durch mehrere Verbindungs-Master-Vorrichtungen (110, 112) der Mikrocontrollereinheit oder des Mikroprozessors (100) mittels mindestens einer Ressourcenzugangsverwaltungsvorrichtung (130, 135), wobei die mehreren Verbindungs-Master-Vorrichtungen (110, 112) Verarbeitungskerne sind,
Ermöglichen des Zugangs zu den Ressourcen durch die mehreren Verbindungs-Master-Vorrichtungen (110, 112) über die mindestens eine Ressourcenzugangsverwaltungsvorrichtung (130, 135) mittels der mindestens einen Ressourcenzugangsverwaltungsvorrichtung (130, 135),
Empfangen einer Angabe, dass in Bezug auf eine Verbindungs-Master-Vorrichtung (110, 112) der Mikrocontrollereinheit oder des Mikroprozessors (100) ein Fehler erkannt wurde, und
Neukonfigurieren mindestens einer Ressourcenzugangsverwaltungsvorrichtung (130, 135) der Mikrocontrollereinheit oder des Mikroprozessors (100) in Reaktion auf das Empfangen einer derartigen Angabe, dass in Bezug auf eine Verbindungs-Master-Vorrichtung (110, 112) der Mikrocontrollereinheit oder des Mikroprozessors (100) ein Fehler erkannt wurde.

14. Verfahren nach Anspruch 13, wobei das Verfahren auf den Empfang der Angabe hin, dass in Bezug auf eine Verbindungs-Master-Vorrichtung (110, 112) der Mikrocontrollereinheit oder des Mikroprozessors (100) ein Fehler erkannt wurde, Folgendes umfasst:
Identifizieren mindestens einer Verbindungs-Master-Vorrichtung (110, 112) der Mikrocontrollereinheit oder des Mikroprozessors (100) in Bezug auf die ein Fehler erkannt wurde, und
Neukonfigurieren der mindestens einen Ressourcenzugangsverwaltungsvorrichtung (130, 135), zumindest teilweise auf der identifizierten mindestens einen Verbindungs-Master-Vorrichtung (110, 112), in Bezug auf die ein Fehler erkannt wurde, basierend.

15. Verfahren nach Anspruch 14, wobei das Verfahren auf den Empfang der Angabe hin, dass in Bezug auf eine Verbindungs-Master-Vorrichtung (110, 112) der Mikrocontrollereinheit oder des Mikroprozessors (100) ein Fehler erkannt wurde, Folgendes umfasst:
Bestimmen eines Betriebszustandes der Verbindungs-Master-Vorrichtungen (110, 112),
Auswählen einer Ressourcenzugangsverwaltungsstrategie von mehreren Ressourcenzugangsstrategien, basierend auf dem bestimmten Betriebszustand der Verbindungs-Master-Vorrichtungen (110, 112), und
Neukonfigurieren de mindestens einen Ressourcenzugangsverwaltungsvorrichtung (130, 135) gemäß der ausgewählten Ressourcenzugangsverwaltungsstrategie.

## Revendications

1. Composant de gestion d'accès à des ressources (125) agencé pour gérer un accès à des ressources (120) dans une unité de microcontrôleur ou dans un microprocesseur (100) formé dans un composant à circuit intégré (105), le composant de gestion d'accès à des ressources (125) comprenant :
au moins un dispositif de gestion d'accès à des ressources (130, 135) configuré pour gérer un accès aux ressources par une pluralité de dispositifs d'interconnexion maître (110, 112) de l'unité de microcontrôleur ou du microprocesseur (100), la pluralité de dispositifs d'interconnexion maître (110, 112) étant des noyaux de traitement,
le ou les dispositifs de gestion d'accès à des ressources (130, 135) étant configurés pour activer un accès aux ressources par la pluralité de dispositifs d'interconnexion maître (110, 112) par l'intermédiaire du ou des dispositifs de gestion d'accès à des ressources (130, 135), et
au moins une unité de configuration d'accès aux ressources (160) agencée :
pour recevoir une indication du moment où un défaut a été détecté en relation avec au moins un dispositif d'interconnexion maître (110, 112) de l'unité de microcontrôleur ou du microprocesseur (100), et
pour reconfigurer le ou les dispositifs de gestion d'accès à des ressources (130, 135) en réponse à la réception de l'indication de ce qu'un défaut a été détecté sur le ou les dispositifs d'interconnexion maître (110, 112).

2. Composant de gestion d'accès à des ressources (125) selon la revendication 1, dans lequel, à la réception de l'indication de ce qu'un défaut a été détecté en relation avec le ou les dispositifs d'interconnexion maître (110, 112), la ou les unités de configuration d'accès aux ressources (160) sont agencées pour :
identifier le ou les dispositifs d'interconnexion maître (110, 112) en relation avec lesquels un défaut a été détecté, et
reconfigurer le ou les dispositifs de gestion d'accès à des ressources (130, 135) sur la base au moins partiellement du ou des dispositifs identifiés d'interconnexion maître (110, 112) en relation avec lesquels le défaut a été détecté.

3. Composant de gestion d'accès à des ressources (125) selon la revendication 2, dans lequel, à la réception de l'indication de ce qu'un défaut a été détecté en relation avec le ou les dispositifs d'interconnexion maître (110, 112), la ou les unités de configuration d'accès aux ressources (160) sont agencées pour :
déterminer l'état fonctionnel des dispositifs d'interconnexion maître (110, 112) pour l'unité de microcontrôleur ou le microprocesseur (100), et
reconfigurer le ou les dispositifs de gestion d'accès à des ressources (130, 135) sur la base au moins partiellement de l'état fonctionnel déterminé des dispositifs d'interconnexion maître (110, 112).

4. Composant de gestion d'accès à des ressources (125) selon la revendication 3, dans lequel, à la réception de l'indication de ce qu'un défaut a été détecté en relation avec le ou les dispositifs d'interconnexion maître (110, 112), la ou les unités de configuration d'accès aux ressources (160) sont agencées pour :
déterminer l'état fonctionnel des dispositifs d'interconnexion maître (110, 112),
sélectionner une règle de gestion d'accès aux ressources à partir d'une pluralité de règles d'accès aux ressources sur la base de l'état fonctionnel déterminé des dispositifs d'interconnexion maître (110, 112), et
reconfigurer le ou les dispositifs de gestion d'accès à des ressources (130, 135) en fonction de la règle sélectionnée de gestion d'accès aux ressources.

5. Composant de gestion d'accès à des ressources (125) selon la revendication 4, où le composant de gestion d'accès à des ressources (125) comprend une pluralité de registres programmables de règles de gestion d'accès aux ressources (170) agencés pour stocker des définitions de règles de gestion d'accès aux ressources, et, à la réception de l'indication de ce qu'un défaut a été détecté en relation avec le ou les dispositifs d'interconnexion maître (110, 112), la ou les unités de configuration d'accès aux ressources (160) sont agencées :
pour sélectionner au moins l'un des registres de règles de gestion d'accès aux ressources (170) en fonction de l'état fonctionnel déterminé des dispositifs d'interconnexion maître (110, 112), et
pour reconfigurer le ou les dispositifs de gestion d'accès à des ressources (130, 135) en fonction d'une définition de règle de gestion d'accès aux ressources stockée dans le registre sélectionné de gestion d'accès aux ressources.

6. Composant de gestion d'accès à des ressources (125) selon l'une quelconque des revendications précédentes, dans lequel le ou les dispositifs de gestion d'accès à des ressources (130, 135) peut être configuré pour gérer un accès à au moins une ressource à mémoires mappées comprenant au moins l'un parmi :
au moins un module de mémoire flash (410),
au moins un module de mémoire à accès direct (420),
au moins un composant périphérique (430), et
au moins un port en vue d'accès à des ressources hors puce.

7. Composant de gestion d'accès à des ressources (125) selon l'une quelconque des revendications précédentes, dans lequel, à la réception de l'indication de ce qu'un défaut a été détecté en relation avec le ou les dispositifs d'interconnexion maître (110, 112), la ou les unités de configuration d'accès aux ressources (160) sont agencées pour reconfigurer le ou les dispositifs de gestion d'accès à des ressources (130, 135) afin d'implémenter au moins une fonction parmi :
l'inhibition d'accès vers au moins une ressource par le ou les dispositifs d'interconnexion maître (110, 112) pour lesquels la détection d'un défaut a été indiquée, et
le re-mappage, vers au moins un dispositif alternatif d'interconnexion maître (110, 112), d'un accès vers au moins une ressource protégée du ou des dispositifs d'interconnexion maître (110, 112) pour lesquels la détection d'un défaut a été indiquée.

8. Composant de gestion d'accès à des ressources (125) selon l'une quelconque des revendications précédentes, dans lequel le ou les dispositifs de gestion d'accès à des ressources (130, 135) comprennent au moins l'un parmi :
un composant d'interconnexion,
une unité de protection de mémoire, et
une unité de gestion de mémoire.

9. Composant de gestion d'accès à des ressources (125) selon l'une quelconque des revendications précédentes, dans lequel la ou les unités de configuration d'accès aux ressources (160) sont agencées pour fournir des informations de reconfiguration à ce ou à ces dispositifs de gestion d'accès à des ressources (130, 135) en réponse à la réception de l'indication de ce qu'un défaut a été détecté en relation avec le ou les dispositifs d'interconnexion maître (110, 112), et le ou les dispositifs de gestion d'accès à des ressources (130, 135) sont agencés pour reconfigurer un accès aux ressources par les dispositifs d'interconnexion maître (110, 112) qui sont ainsi autorisés en fonction des informations de reconfiguration reçues.

10. Composant de gestion d'accès à des ressources (125) selon la revendication 9, dans lequel les informations de reconfiguration procurées par la ou les unités de configuration d'accès aux ressources (160) à ce ou à ces dispositifs de gestion d'accès à des ressources (130, 135) comprennent un enregistrement du format de configuration des dispositifs.

11. Composant de gestion d'accès à des ressources (125) selon l'une quelconque des revendications 1 à 8, dans lequel la ou les unités de configuration d'accès aux ressources (160) sont agencées pour reconfigurer au moins un paramètre de configuration d'accès pour le ou les dispositifs de gestion d'accès à des ressources (130, 135) en réponse à la réception de l'indication de ce qu'un défaut a été détecté en relation avec le ou les dispositifs d'interconnexion maître (110, 112).

12. Unité de microcontrôleur ou microprocesseur (100) formé dans un composant à circuit intégré (105), l'unité de microcontrôleur ou le microprocesseur (100) comprenant :
une pluralité de dispositifs d'interconnexion maître (110, 112), et
au moins une ressource de traitement (120),
où l'unité de microcontrôleur ou le microprocesseur (100) comprend en outre un composant de gestion d'accès à des ressources (125) conforme à l'une quelconque des revendications précédentes.

13. Procédé de gestion d'accès à des ressources dans une unité de microcontrôleur dans un microprocesseur (100), l'unité de microcontrôleur ou le microprocesseur (100) étant formé dans un composant à circuit intégré (105), le procédé comprenant :
la gestion, opérée par au moins un dispositif de gestion d'accès à des ressources (130, 135), d'un accès à des ressources (120) par une pluralité de dispositifs d'interconnexion maître (110, 112) de l'unité de microcontrôleur ou du microprocesseur (100), la pluralité de dispositifs d'interconnexion maître (110, 112) étant des noyaux de traitement,
l'autorisation, accordée par le ou les dispositifs de gestion d'accès à des ressources (130, 135), d'un accès aux ressources par la pluralité de dispositifs d'interconnexion maître (110, 112) par l'intermédiaire du ou des dispositifs de gestion d'accès à des ressources (130, 135),
la réception d'une indication de ce qu'un défaut a été détecté en relation avec un dispositif d'interconnexion maître (110, 112) de l'unité de microcontrôleur ou du microprocesseur (100), et
la reconfiguration d'au moins un dispositif de gestion d'accès à des ressources (130, 135) de l'unité de microcontrôleur ou du microprocesseur (100) en réponse à la réception de ladite indication montrant qu'un défaut a été détecté en relation avec un dispositif d'interconnexion maître (110, 112) de l'unité de microcontrôleur ou du microprocesseur (100).

14. Procédé selon la revendication 13, le procédé comprenant, à la réception d'une indication de ce qu'un défaut a été détecté en relation avec un dispositif d'interconnexion maître (110, 112) de l'unité de microcontrôleur ou du microprocesseur (100) :
l'identification d'au moins un dispositif d'interconnexion maître (110, 112) de l'unité de microcontrôleur ou du microprocesseur (100) en relation avec lequel un défaut a été détecté, et
la reconfiguration du ou des dispositifs de gestion d'accès à des ressources (130, 135) sur la base au moins partiellement du ou des dispositifs identifiés d'interconnexion maître (110, 112) en relation avec lesquels un défaut a été détecté.

15. Procédé selon la revendication 14, le procédé comprenant, à la réception d'une indication de ce qu'un défaut a été détecté en relation avec un dispositif d'interconnexion maître (110, 112) de l'unité de microcontrôleur ou du microprocesseur (100) :
la détermination de l'état fonctionnel des dispositifs d'interconnexion maître (110, 112),
la sélection d'une règle de gestion d'accès aux ressources à partir d'une pluralité de règles d'accès aux ressources sur la base de l'état fonctionnel déterminé des dispositifs d'interconnexion maître (110, 112), et
la reconfiguration du ou des dispositifs de gestion d'accès à des ressources (130, 135) en fonction de la règle sélectionnée de gestion d'accès aux ressources.
